# EUROPEAN PATENT SPECIFICATION

(11) **EP 2 774 807 B1**
(45) Date of publication and mention of the grant of the patent: **26.09.2018**
(21) Application number: 14158118.1
(22) Date of filing: 06.03.2014
(51) Int. Cl.: B60N 2/58

(54) **Festooned trim clip system and method for attaching festooned clips to a substrate**
Schleppbefestigungsklemmensystem und Verfahren zur Befestigung von Schleppklammern auf einem Substrat
Système d'attache de garniture en guirlande et procédé de fixation d'agrafes en guirlande sur un substrat

(30) Priority: 07.03.2013 US 201313787929
(43) Date of publication of application: 10.09.2014
(73) Proprietor: Hope Global, Division Of Nfa Corp., Cumberland RI 02864 (US)
(72) Inventor: Santin, Andrew W., Newton MA Massachusetts 02465 (US); Jones, David F., Northboro MA Massachusetts 01532 (US); Neves, Carlos A., Cumberland RI Rhode Island 02864 (US)
(74) Representative: Pfister, Stefan Helmut Ulrich

(56) References cited:
- WO-A2-2007/008662
- WO-A2-2009/035590

## Description

### FIELD OF THE INVENTION

This invention relates to trim and upholstery attachment mechanisms, and more particularly to clips for attaching trim and upholstery to foam and other resilient or flexible substrates.

### BACKGROUND OF THE INVENTION

Modem fabric trim covers (upholstery), such as those used in vehicles, often carefully sculpted and shaped to produce a comfortable and aesthetically pleasing effect. As such, the fabric (typically cloth, vinyl or leather with an appropriate backing material) is secured at many locations along its surface to a resilient or flexible backing that defines the cushioned substrate of the upholstered item (for example, a seat bottom, cushion, back or headrest). The substrate is typically constructed from a resilient material. This resilient/flexible material can be synthetic foam (for example polyurethane and/or isocyanate-based foam) or another cushioning material, such as traditional rubberized horsehair, hoghair, and the like. In general, the close-fitting appearance of the upholstery to the substrate requires that the fabric be tacked down to the substrate at any intermediate dips, Vees or trenches in the surface. Otherwise, the fabric will tend to billow or "tent" at these non-planar surface features.

Traditional methods for tacking down trim covers at trenches entail the use of a plastic bead along the inner side of the trim cover. This bead is often located at an inner seam that is a sewn or welded, or otherwise adhered, joint between fabric pieces. Likewise the foam substrate includes an exposed metal wire that may be molded into the substrate along a trench in its surface during its construction. So-called "hog-rings," consisting of bendable metal ringlets, are then secured to both the plastic bead and the metal wire. These rings are each applied by a tool, such as a hog-ring gun from a supply of wire. As each hog ring is secured, it forms an immovable, permanent joint between the fabric and the substrate. Clearly, this permanent joint is difficult to repair if needed and requires significant skill to create in the first place. In addition, this method of seat cover attachment leads to the development of injuries, such as carpal tunnel syndrome in employees who operate the hog ring tool over an extended period of time. Finally, the use of metal components may be undesirable where the seat includes electrical heating elements due to the metal's predisposition to conduct both heat and electricity.

More recently, trim covers have been secured to resilient substrates using detachable connections that allow repairs to be effected and are often more-easily applied without the used of highly skilled labor. In one example, one side of a hook and loop fastener is attached to a trench in the resilient substrate. The inner surface of the trim cover carries the opposing side of the fastener. This approach is reliable, but expensive, in terms of material wasted and consumed to attain a secure fit. It also requires a rather large-width trench to be formed in the resilient substrate to ensure a sufficient area of engagement between fastener sides.

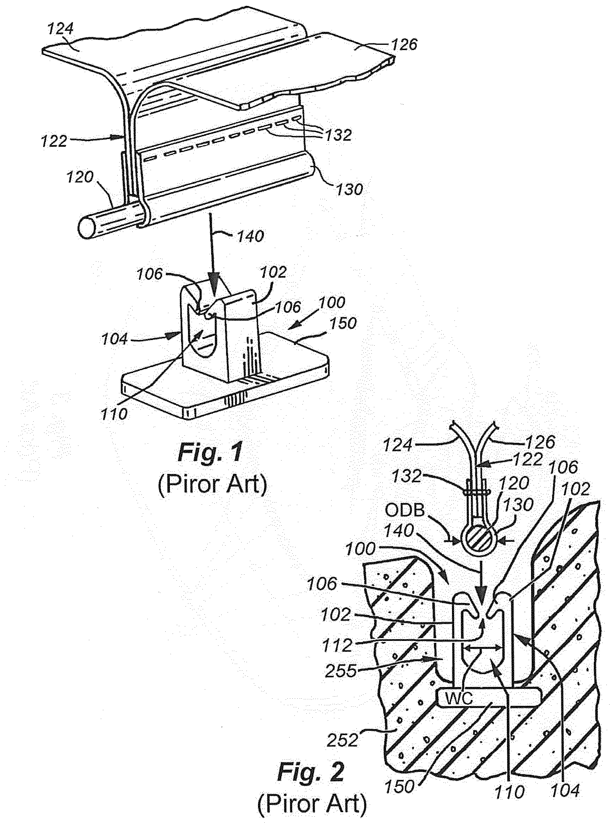

Another recent approach involves the used of a series of clips that are molded into the trench as a foam substrate is manufactured. A version of this structure, and other prior art attachment mechanisms, are described in U.S. Published Patent Application US/2003/0215601 A1, entitled ATTACHMENT DEVICE, dated Nov. 20, 2003, by Peede, et al. the teachings of which are expressly incorporated herein by reference. A simplified version of such a clip and its use are shown in Figs. 1-3 herein. As shown particularly in Figs. 1 and 2, each clip 100 includes a pair of outwardly facing (with respect to the trim-cover-facing surface of the substrate) legs 102 that together form a female projection 104 with a pair of upper hooks or barbs 106 that face toward each other, thereby defining a top-end funnel, leading into a cavity 110. The barbs 106 define a narrow gap 112 therebetween. This gap 112 is smaller in width than the width of the cavity 110. The material and relative thickness of the legs 102 is such that the barbs 106 can be spread elastically apart so that an appropriately sized cylinder can pass between the legs to be thereafter trapped in the cavity against outward movement by the sprung-back barbs 106. In this case, the cylinder is the covered plastic or metal bead 120 attached to a seam 122 between two trim cover fabric pieces 124 and 126. This bead assembly is also known as "listing" in the industry. In this example, the bead 120 is surrounded by a piece of nonwoven covering 130 that retains the bead against the bottom of the seam 122 using stitching 132 (or another attachment mechanism). Collectively the diameter of the bead 120 and covering 130 define an outer diameter ODB approximately equal to, or slightly less than, the lateral width WB of the cavity 110. Thus, in operation, an installer need only press the bead 120 down between the barbs 106 (arrow 140) so that the angled funnel tops of the barbs cause the legs 102 to spread, allowing the bead 120 to pass therebetween. Once the bead 120 passes fully between the barbs 106, then the bead 120 is mechanically retained beneath the barbs 106 within the cavity, and the seam 122 (and facing cover 130), extend through the gap 112 to hold that particular part of the trim cover (124 and 126) against the clip 100.

The clip includes a base 150 having a relatively thin cross section and an increased surface area adapted to act as an anchor within the (foam) substrate material 252. As shown (Fig. 2), the base is disposed beneath the surface of a trench 254. The base is locked into the matrix of the substrate as a result of the molding process in which foam covers the base and adheres to the base's material. Typically, the clip 100 is mounted in the bottom of a trench 254 as shown. In this manner, sufficient setback is provided to allow the seam 122 to sink into the substrate for a taut fit against its surface.

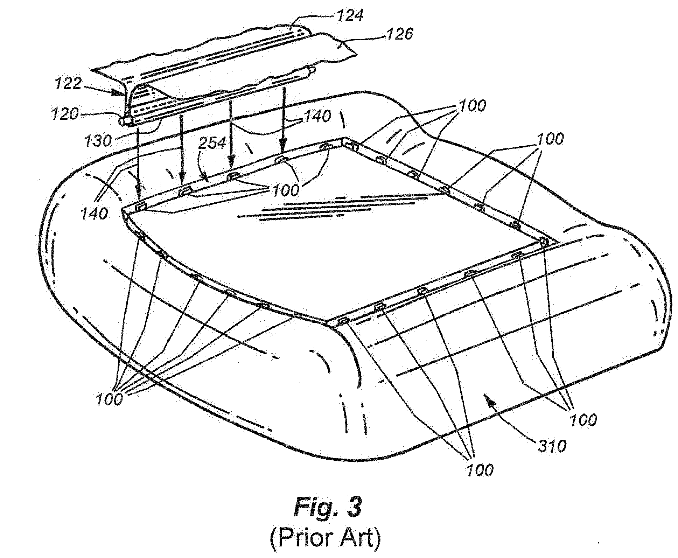

Fig. 3 shows an exemplary vehicle seat foam cushion 310 according the prior art. A plurality of clips 100 are located along the trench at an appropriate degree of spacing so as to ensure that the bead of the trim cover defines a continuous, unsegmented shape. In the example of a seat bottom or back, approximately 12-30 clips may be needed to define a desired shape. In general, the tighter the curvature of the substrate, the smaller the clip spacing provided. The above-referenced published U.S. patent application contemplates that the spacing between clips can be regulated, in part, by providing fixed-space, flexible connectors between individual clips and molding such clips into the foam substrate with the predetermined spacing defined by the connectors.

The above-prior art clips typically constructed from a resilient material, which allows for the flexure imparted by insertion of the bead into their respective cavities. However, these clips should also adhere firmly to the foam or other resilient substrate material. Hence, the clip material should exhibit properties so that it appropriately adheres to the substrate so that it will not eventually detach under long-term use.

The process of inserting clips into a foam mold cavity, used for example to form seat parts, is typically a manual operation that is time-consuming, labor-intensive and sometimes subject to inaccurate placement. Clips are dispensed from inside loosely packed boxes, and each one must be individually picked, reoriented properly, and inserted into the appropriate location in the mold cavity for subsequent foam application thereover. This process contains inherent inefficiencies that the worker cannot fully overcome. Moreover, loosely packing ganged groups of clips, connected by intermediate connecting segments further complicates handling. It has been found that a loosely packed supply of ganged clips generally assumes a "bird's nest" entanglement that is extremely difficult to unravel.

Accordingly it is desirable to provide a system for dispensing clips that makes their orientation predictable, and handling more efficient. It is further desirable that the system entail minimal or no waste, and potentially allow for the placement of multiple "ganged" clips into the foam mold cavity at one time. The clips of this system should also display good general adhesion to foam so as to minimize subsequent detachment or pullout, while still withstanding normal cyclic loads and other stresses likely to be encountered in assembly and subsequent long-term use.
The document WO 2009/035590 A2 discloses a low-profile clip adapted to secure a listing bead to a foam substrate. The clip may include a base and a pair of legs extending upwardly from the base and defining therebetween a central region constructed and arranged to capture the listing bead.

### SUMMARY OF THE INVENTION

This invention overcomes the disadvantages of the prior art by providing a single or multi-ganged clip that can be grouped into a festooned arrangement. That is, a plurality of clips are arranged together into a discrete assembly along a line of extension so that a human or automated handler can retrieve a grouping, separate one-clip-at-a-time from the grouping, and apply the separated clip to a mold cavity or other assembly structure. Each clip can include a base with opposing ends aligned in the direction of extension and transverse to an elongation direction for a connecting segment (if any) between ganged clip members. In an illustrative embodiment, these base ends include opposing male and female connectors. In this embodiment the male connector is a cylinder with an axis that extends transverse to the direction of elongation and the female connector defines a conforming cylindrical inner diameter, which allows it to nest over the male cylinder. A gap opening is provided at the far edge of the female connector to provide clearance for the base that connects the male cylinder to the clip member base end. This gap can be sized to allow a predetermined range of angular rotation of the male connector about its axis within the female connector. Clips can be stored as discrete groupings that are stacked in a container or paid out in a continuous grouping from a spool.

In an alternate embodiment, the male connector can be side braces that extend from the clip member's base end and thereby define a slot between the base end and the male cylinder. The female connector can be sized in lateral width and thickness to ride within the slot as the adjoining clips are angularly rotated with respect to each other. This arrangement affords a greater range or bending that can be useful in continuous feed implementations. The bases of clip members can be provided with holes that are engaged by a tractor pin-feed mechanism, or another drive formation can be provided to the clips. Any of the clips contemplated herein can be assembled into unitary or detachable multi-ganged arrangements of clip members separated by (narrowed) connecting segments. In a dual ganged configuration, male and female connectors on opposing clip members of a given clip can be located on opposite base end sides, thereby allowing clips to be attached to each other ambidextrously.

The above-described clips, and other types clips that are adapted to be mounted within foam, can be constructed from a material that reacts chemically with the foam in a liquid state. An illustrative material is polycarbonate, and it is expressly contemplated that other similar materials with needed heat-resistance, durability and (optionally) surface reactivity to liquid foam can be employed to construct clips and/or clip member bases in accordance with this invention.

### BRIEF DESCRIPTION OF THE DRAWINGS

The invention description below refers to the accompanying drawings, of which:
Fig. 1, already described, is an exploded fragmentary perspective view of a trim cover bead and clip according to the prior art;
Fig. 2 is, already described, is a fragmentary side cross section of the clip and trim cover bead of Fig. 1 mounted in an exemplary substrate trench;
Fig. 3, already described, is a fragmentary perspective view of an exemplary substrate (a seat bottom) having a surrounding inboard trench with a plurality of clips molded thereinto and receiving a piece of a trim cover bead;
Fig. 4 is a perspective view of an exemplary festooned grouping of a plurality of dual-ganged clips according to an illustrative example;
Fig. 5 is a perspective view of a single dual-ganged clip from the festooned grouping of Fig. 4;
Fig. 6 is a side view of the clip of Fig. 5;
Fig. 7 is a partially cut-away perspective view of a storage and dispensing box for use with predetermined-size festooned groupings of dual-ganged clips according to an example;
Fig. 8 is a perspective view of a storage and dispensing spool for use with continuous-run, festooned grouping of dual-ganged clips according to an example;
Fig. 9 is a partial side view of two layers of spooled clips in accordance with the example of Fig. 8;
Fig. 10 is a perspective view of an exemplary festooned grouping of a plurality of dual-ganged clips, adapted for greater angular deflection between clips, according to an example;
Fig. 11 is a side view of the festooned grouping of clips according to Fig. 10 illustrating an increased range of possible angular deflection;
Fig. 12 is a perspective view of an exemplary festooned grouping of a plurality of dual-ganged clips, employing a pair of flexible strips to which ganged clips are removable attached, according to an example;
Fig. 13 is a partial perspective view detailing a typical application of dual-ganged clips to a mold cavity according to an example;
Fig. 14 is a perspective view of a triple-ganged clip adapted to be assembled into a festooned grouping of variable size according to an example;
Fig. 15 is a perspective view of a festooned grouping of single clips in accordance with an example;
Fig. 16 is a somewhat schematic exposed side view of a mold assembly used to form multi-ganged festooned clips in accordance with an example, shown in a closed orientation;
Fig. 17 is a somewhat schematic side view of the mold assembly of Fig. 16 shown opened so as to allow removal of an exemplary dual-ganged molded clip;
Fig. 18 is a partially exposed perspective view of an exemplary clip constructed from a material in accordance with an example
   that exhibits chemical adhesion in contact with commercially available foam substances;
Fig. 19 is a perspective view of a storage and dispensing spool for use with a continuous run of an elongated arrangement of single-gang clips according to an example;
Fig. 20 is a perspective view of the storage and dispensing spool of Fig. 19 mounted at a drive assembly at an exemplary workstation;
Fig. 21 is a schematic diagram of a feed control system for use with the workstation of Fig. 20 shown dispensing the clips from the spool of Fig. 19, including a loop sensor and a feeder for controlling the separation of a predetermined numbers of clips;
Fig. 22 is a schematic diagram illustrating a sequence of steps related to an exemplary foam substrate molding process in which a predetermined number of the clips of Fig. 19 are dispensed for assembly into the mold cavity according to an example;
Fig. 23 is a side view of a plurality of joined of clips according to Fig. 19 showing the profile geometry according to the invention;
Fig. 23A is a fragmentary view of an illustrative clip according to Fig 9 showing application of a blade (e.g. a screwdriver tip) to spread the clip legs for detachment of a listing bead therefrom, according to the invention;
Fig. 24 is a top view of the plurality of joined of clips shown in Fig. 23;
Fig. 25 is a schematic top view of a detachment mechanism for separating predetermined numbers of clips from the overall joined arrangement; and
Fig. 26 illustrates the basic clip geometry of Figs. 23 and 24 in a dual-ganged arrangement.

### DETAILED DESCRIPTION

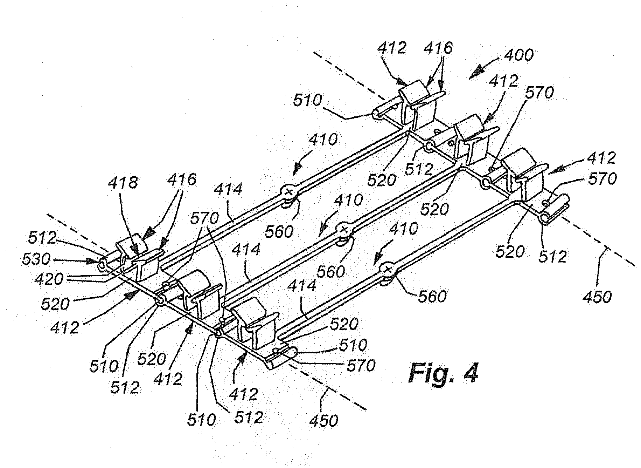

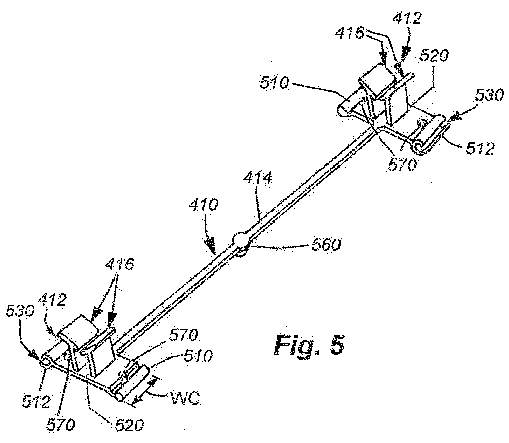

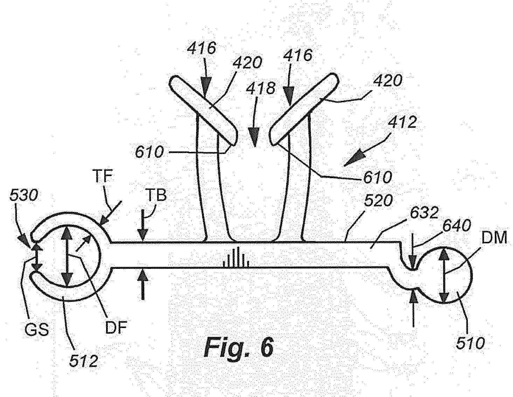

Fig. 4 shows a festooned grouping 400 of dual-ganged clips 410 according to an embodiment of this invention. With reference also to Figs. 5 and 6, the clips 410 comprise a pair of opposed clip members 412 (also sometimes referred to herein as "clips"), joined by a central shaft segment 414. Each discrete clip 410 in the festooned grouping is a unitary structure, with the clip members 412 and adjoining intermediate segment 414 being molded together as a single unit. As will be described below alternate forming techniques, such as extrusion are also contemplated.

The clips 410 of this invention can be constructed from a variety of materials, which will also be described in further detail below. In general, the material should be durable, capable of withstanding reasonable levels of heat and pressure and flexible so as to provide a good spring material. To this end, it is noted that each clip member 412 includes a pair of upright leg assemblies 416 extending from a generally planar, central base 520, which define therebetween a gap 418. This gap 418 allows insertion of the bead of a listing member (or other structure-to-be-secured) thereinto. In general, the legs are adapted to move elastically away from each other as a bead is passed through the gap.

Referring particularly to Figs. 5 and 6, the leg assemblies 416 each include a respective inwardly slanted hook or barb 420 that together help to guide and/or funnel the listing into the gap 418. In addition, the barbs 420 each define an inner shoulder 610 (Fig. 6) that restricts outward movement of the listing, or other structural member, once it is forcibly inserted though the gap 418. The leg assemblies 416 are sized in thickness so that they exhibit a predetermined level of spring elasticity with respect to the central clip base 520. The size and shape of the clip base is highly variable. While not shown, the central clip base 520 can include a reinforcing rib, or other reinforcing structure, which extends below the flat upper portion 632 to help prevent flexure and/or breakage of the base 520 as the leg assemblies 416 are spread apart in certain embodiments. Any additional base reinforcement, as well as the general perimeter shape of the base 520 (shown here as a basic rectangle) are adapted to provide needed surface area for adhesion to the foam substrate as will be described further below. The particular structure of the base and leg assemblies are both highly variable and a variety of reinforcing ribs, flanges and other structures can be appended to each clip member as appropriate. The degree of reinforcement depends, in part, on the strength and durability of the materials employed to form the clip and the environment to which the clip is exposed during assembly and subsequent use.

Notably, extending from opposite ends of the base 520 (in a direction transverse to the elongation of the segment 414) is provided a pair of attachment members or "connectors" 510 and 512. In this embodiment, one attachment member 510 is an elongated cylindrical male connector and the opposing attachment member 512 is an open, semi-cylindrical female connector. The diameter DM of the male connector conforms relatively closely to the inner diameter DF of the female connector. In fact, DM can be slightly larger than DF in order to define a friction fit to maintain a given angular orientation between joined connectors 510, 512.

As shown particularly in Fig. 4, on adjacent clip members 412, each of the male connectors 510 is nested within a respective female connector 512 to define the depicted, festooned grouping of clips 400. The open gap 530 in each female connector includes the spacing distance GS (see Fig. 6) that is generally greater than the distance of the male connector base 640 (see Fig. 6), which extends between the central clip base 520 and the body of the mail connector 510. In this embodiment, the connector base 640 is a curved segment that positions the male connector slightly below the top plane of the central base 520. As will be described below, the female connector gap GS allows for limited rotational movement of male connectors when nested within female connectors. For the purposes of this embodiment, the male connector diameter DM is approximately three millimeters. The female connector inner diameter DF is approximately three millimeters with a slight reduction in relative size to provide the desired friction fit. The gap distance GS is approximately two millimeters, while the thickness TF of the female connector 512 is approximately one millimeter. The width WC (Fig. 5) of the male and female connectors is approximately eight millimeters. It is noted that these measurements are all exemplary and can be varied as appropriate depending upon the materials used and the application for the clip. In general, in the depicted applications, measurements such as width WC and diameter DM/DF can vary by several millimeters in alternate embodiments. The dimensions of the leg assemblies 416 are, likewise, highly variable. The leg assembly dimensions can be based upon the size and shape of the listing being engaged and other factors, such as the thickness of the foam substrate. The thickness TB of the base 520 is in a range of between approximately 1.5 to 2 millimeters in an exemplary embodiment. The thickness 640 of the male connector base is approximately one millimeter. This is sufficiently smaller than the gap distance DF for a female connector to allow the above-described rotational movement between clips, within a pre-determined range of arcuate, rotational movement.

Referring further to grouping 400 shown in Fig. 4, it is noted that each dual-ganged clip 410 is provided with alternating female and male connectors 512, 510 (respectively) on a given side of the clip. In other words, as depicted, the left hand clip member includes a male connector 510, while the right hand clip member includes a female connector 512. In the exemplary dual-ganged arrangement, this ensures that each clip is "ambidextrous" with respect to adjacent clips. In other words, each clip can be attached to adjacent clips in either of two orientations. This, of course, assumes that all clips are assembled with leg assemblies 416 facing the same (upward) direction. In alternate embodiments, male connectors can both be disposed on the same clip side and female connectors can both be placed on the opposite clip side. Such clips would not exhibit the above-described ambidextrous capability.

In the depicted embodiment, a central enlarged tab 560 is provided along the connecting segment 414. This tab is optional, and is, in part, a byproduct of the molding processors used to form the clip 410. However, this tab 560, as well as other structures on the clip 410, can be used to provide an identifying mark (such as the depicted "X"), which may indicate information manufacturing date, lot number and/or other desirable data. The enlarged tab 560 may also assist a worker in grasping the given clip for assembly into a foam structure. Similarly, the clip may provide a useful grasping point for removal of the clip from a clip-formation mold using manual or automated possesses.

In this embodiment, the base 520 of each clip also includes opposing throughout holes 570. These holes are optional, but can be sized and arranged so as to allow the clip segment to be driven by an appropriately sized and shaped tractor-pin-feed drive unit. Such a unit is particularly desirable where clips are fed in a continuous line, as will be described further below.

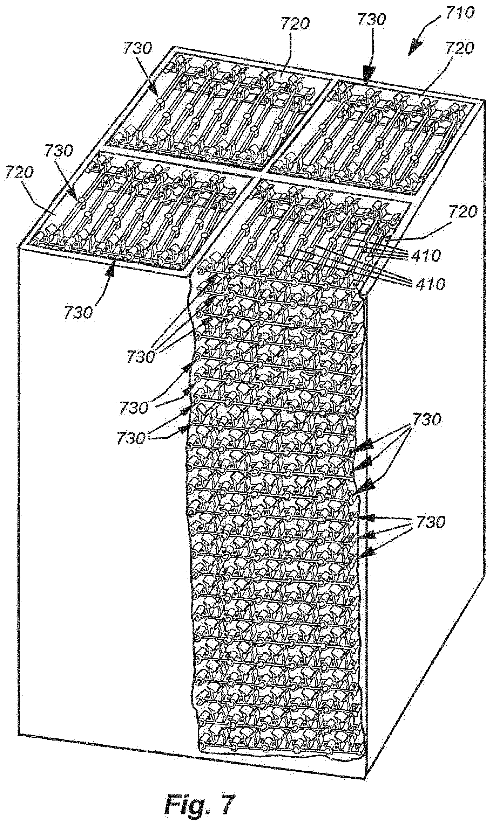

The number of clips grouped together, in accordance with the arrangement of Fig. 4, can be highly variable. In practice, an unlimited number of clips can be grouped together, thereby extending the group continuously along a line elongation (dashed line 450 in Fig. 4) define a festooned grouping of clips that suits a given end user's needs. One possible arrangement of grouped clips of clips is shown in Fig. 7. As depicted, a box or crate 710 has been provided with four separated compartments 720 and an open top. Within each compartment 720 is a stack of festooned groupings of clips 730. In this embodiment, each clip grouping 730 includes five interconnected, dual-ganged clips 410. The actual number of connected clips in a stacked grouping is highly variable in alternate embodiments. The exemplary group of five festooned clips generally provides for an easily manipulated size and shape for the average worker. By providing an integral, assembled group of clips, it stacks easily with respect to other groups without the risk of entanglement between groups. This is, in part, because each line of assembled clip members essentially establishes a continuous, flat strip that lies squarely on the tops of the leg assemblies of the underlying group. Hence, each grouping is supported by the combined expanse of leg assemblies in the underlying group. This prevents birds-nest-style entanglement that would result from a loosely packed supply of individual dual-ganged clips. The walls of each compartment are sized to restrict lateral (aligned with the connecting segments) and front-to-rear movement of each grouping. The flat bases of the clips remain squarely positioned over the leg assemblies of the underlying group in the stack.

In the exemplary storage embodiment of Fig. 7, there are twenty-three layers of clip groups divided into four compartments. A worker can easily lift each group out as a single unit as needed. With proper sizing, the box 710 can be arranged to define a cube with an approximate dimension of twelve inches by twelve inches by twelve inches in an exemplary embodiment. Boxes having other sizes, shapes and compartment arrangements are expressly contemplated in alternate embodiments.

In use, a worker or mechanical device removes a grouping of clips 730 from the top of a stack in one of the compartments 720. As needed each individual clip is then detached from the grouping by either (a) applying front-to rear tension to pull the clip away from the adjacent clip in the grouping pulling them apart (thereby spreading the female connector gap 530 and overcoming the spring force of each female connector, or (b) are sliding the clip laterally (in the direction of extension of the connecting segment (414)) relative to an adjacent clip in the grouping. Lateral sliding requires less force in most instances, but may require more dexterity than simply pulling clips apart. In either case the material of the clip member and the dimensions of male and female connectors are adapted to allow application of reasonable force without causing the clips to break. Once separated, clips can be assembled into a mold cavity by hand, or automated action, as described generally below.

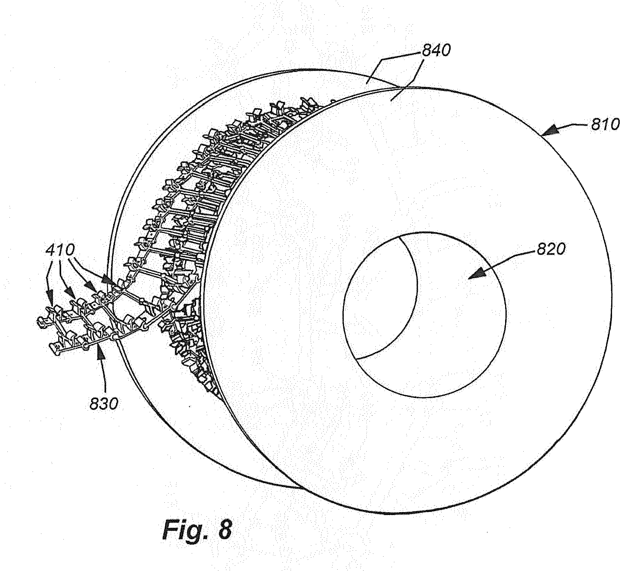

Because the novel system for allowing grouping of clips of this embodiment provides for an unlimited length and a moderate degree of angular rotation between assembled groupings of clips, the system lends itself to the provision of a long, continuous length of clips on a reel or spool. An exemplary spooled arrangement of clips is shown in Fig. 8. The spool 810 includes and open central core 820 that supports a continuous length grouping 830 of clip s 410 in accordance with an embodiment of this invention. Because the bases of the clips form a continuous surface, they rest fully supported over the leg assemblies of underlying clips without falling through the underlying clips. To help prevent entanglement, this embodiment, the spool 810 includes two closely fitting side flanges 840 that restrict axial movement of clips so that each layer of grouped clips remain squarely located over the leg assemblies of the underlying clip layer.

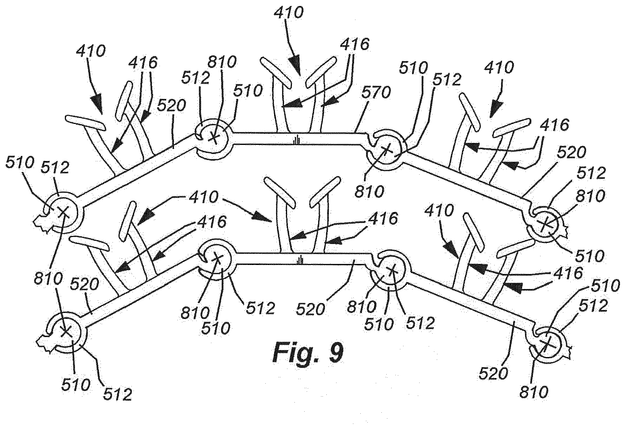

Also referring briefly to Fig. 9, the relationship between layers of stacked clips on a spool is shown in further detail. As depicted, each clip 410 is allowed to angularly deflect about a respective rotational axis 810 relative to an adjacent clip. The angular deflection (as defined by the relative orientation of the plane of each clip's base with respect to that of an adjacent clip's) of each clip with respect to an adjacent clip, in a spool arrangement, is determined by where the line of connected clips are with respect to the core 820. The minimum diameter of the spool core is generally restricted by the maximum bend angle between adjacent, connected clips. The bend angle can be varied, in part, by varying the diameter of the male and female connections 510 and 512 and increasing the width GS of the female connector gap spacing 530. However, angular deflection is essentially limited to a predetermined range that corresponds to a minimum core diameter in this embodiment.

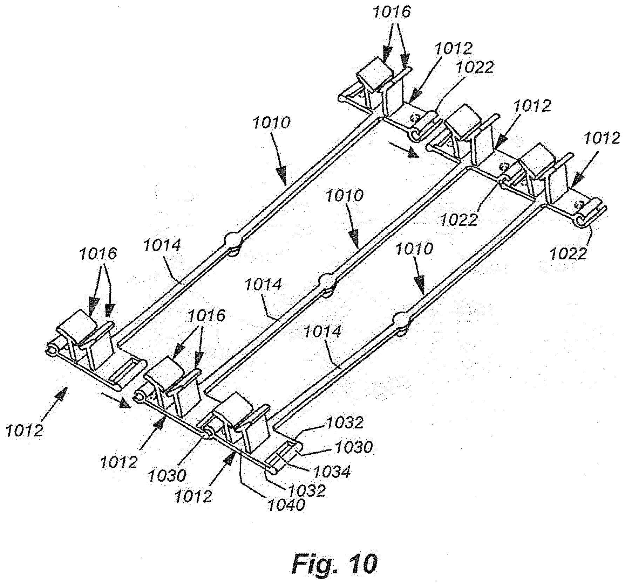

An alternate embodiment for a clip 1010 is shown in Fig. 10. This clip 1010 also consists of a dual-ganged configuration with clip members 1012 on each of opposing ends of a narrowed, central joining segment 1014. This clip 1010 includes similarly constructed leg assemblies 1016 to those described above with respect to the clip 410 for engaging an appropriately dimensioned listing bead. The female connector 1022 of each clip is sized and arranged similarly to the female connector 512 described above. However, the male connector 1030 for each clip member 1012 is arranged on a pair of forwardly extending side braces 1032 that define an open central well or slot 1034 between the central base 1040 of the clip member 1012 and the cylindrical body of the male connector 1030. This well is sized and arranged so that, when a female connector 1022 is attached to a male connector 1030, the female connector rides within the slot 1034. In other words, the slot 1034 has a width in each of two orthogonal directions that is generally greater than the corresponding thickness and width of the female connector.

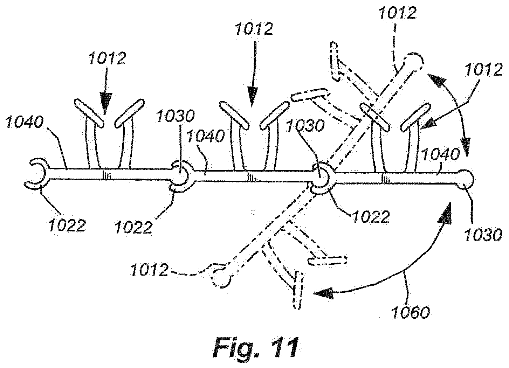

As shown further in Fig. 11, the relative arrangement of the male connector 1030 and female connector 1035 allows each clip connected to move rotationally within a substantial range of angular deflection (shown in phantom) to allow the line of connected clips to be wrapped around a small-diameter core. In this example, the connected clips may actually bend to relative angles (defined by the plane on each clip's central base 1040) in excess of 90 degrees (see double-curved arrow 1060). This added range of inter-clip angular deflection may also be beneficial where clips are likely to be fed along a continuous line that contains various turns and bends. Also, this arrangement may be beneficial where lines of clips are subjected to significant bending during manual handling. Over-bending of clips with a low-degree of tolerable angular deflection may otherwise cause their ends to break.

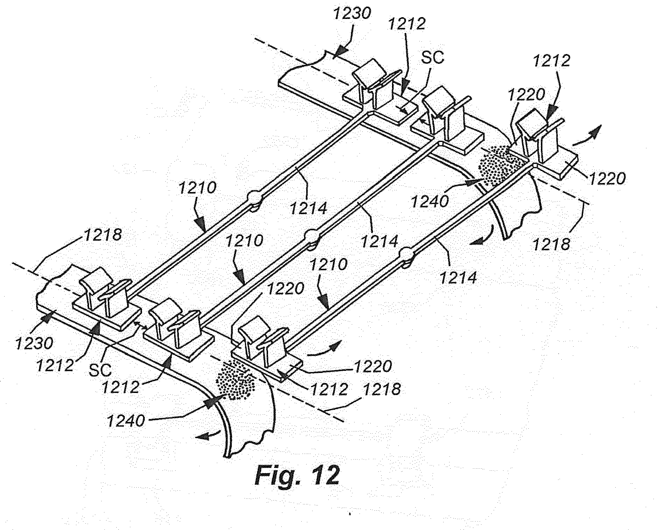

Another technique for providing a festooned grouping of clips is shown in Fig. 12. In this embodiment, the exemplary clips 1210 include two clip members 1212 joined by a unitary central segment 1214. In this embodiment each clip member also includes opposing ends 1220 (in the direction of feeding/grouping-dashed lines 1218) that are free of any clip-to-clip connectors, or other like structures. A continuous flexible strip or tape 1230 underlies each clip member 1212. The clip members 1212 are placed at a predetermined spacing SC along each strip 1230. Each strip 1230 can carry a continuous coating of adhesive, or a concentrated adhesive spot 1240 that specifically underlies the location of each attached clip member 1212. The adhesive can be any desirable industrial adhesive capable of removably securing the clip to the strip. Likewise, the strip 1230 can be constructed from paper, polymer sheet or any other synthetic/natural sheet material with the ability to flex and bend as shown. As clips 1214 are needed by a worker or automated device, they are torn from the strip, whereby the adhesive contact between the strip and each overlying clip member is broken. In alternate embodiments, one or more strips 1230 can be adhered to each clip between clip members, within the center region of the grouping, along, for example, the central segment 1214. In still further alternate embodiments, a pair of confronting strips may sandwich the segments 1214. In such an arrangement, clips can be removed by separating the two strips and withdrawing the clip therefrom in the manner of peeling a banana skin to withdraw the fruit.

While a tape or strip-base holding system has advantages in that it is highly flexible, it should be noted that this arrangement also provides an extra component that may add waste, and may become fouled in certain machinery. Thus, this embodiment may not be desirable in some instances.

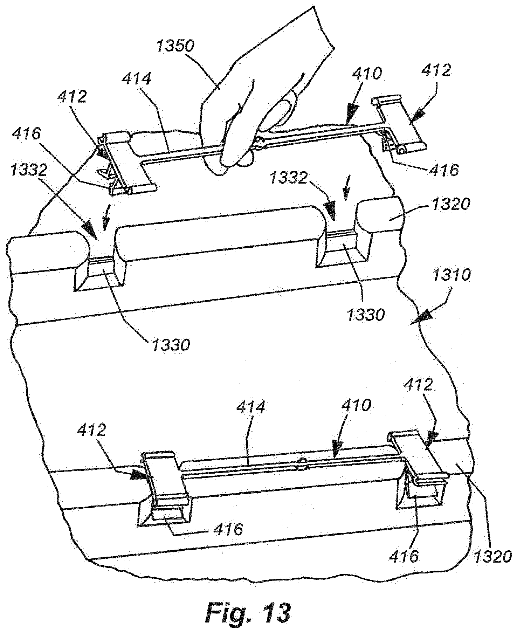

With reference now to Fig. 13, a typical procedure for employing clips 410, once they are removed from a festooned group is shown. In this embodiment, a portion of an exemplary foam cushion mold cavity 1310 is depicted. This mold cavity includes rails 1320 upon which ganged clips 410 are mounted. In particular, each clip member's leg assemblies 416 are passed over narrowed webs 1330 formed within breaks 1332 in the rails 1320. As liquid foam is introduced to the mold cavity, the rails 1320 define trenches within the foam, such as those described above with reference to Fig. 3. The clips subsequently reside in the trenches with gaps between their legs exposed for insertion of listing. The rail webs 1330 provide accurate reference point for positioning clips during the molding process. They also prevent undesired movement of the clips while the foam is applied and cures.

As shown in Fig. 13, a worker's hand 1350 grasps a central segment 414 of the subject clip 410 and inserts it so that its leg assemblies 416 surround the web. The completed insertion is shown in the foreground of the illustration. When liquid foam is applied, it will surround and engage the clip members 412 and the central segment 414 so as to retain them with respect to the foam. As noted above, the particular materials employed to construct the clip 410 influence the effectiveness of the adhesion between the solidified foam and the embedded clip. In an alternate embodiment, it is contemplated that the process for insertion of single or ganged clips can be automated. One such automation technique is described with reference to rail clips. This process employs an end-effector that grasps and deposits clips onto a mold cavity. This process is described with reference to U.S. patent application Ser. No. 11/615,954 entitled CLIP FOR JOINING TUBULAR MEMBERS TO SUBSTRATES by Andrew W. Santin et al., the teachings of which are expressly incorporated herein by reference. It should be clear that a variety of robotic and/or electromechanically techniques can be employed to affect automation of clip placements. Such automation can employ a continuous feed of clips from for example, a spool as shown in Fig. 8.

The above-described embodiments show and define a dual-ganged clip. A dual-ganged clip has certain advantages in particular applications. It allows for ambidextrous interconnection, is not so elongated as to flop or flex excessively and is relatively easy to manipulate. However, it is expressly contemplated that the number of ganged clip members on a given groupable clip structure can be greater or less than the two joined clip members 412 shown and described above.

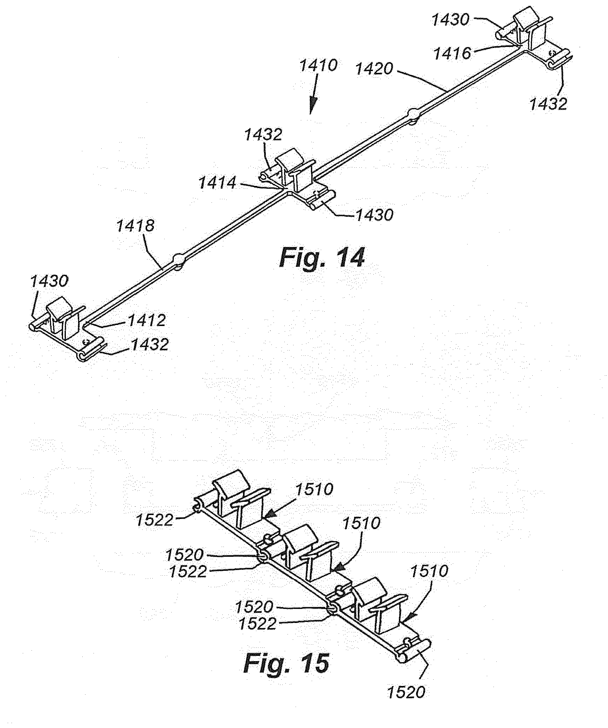

Thus, Fig. 14 details a triple-ganged clip 1410. The three separated clip members 1412, 1414 and 1416 on this unitary clip 1410 are joined by intervening segments 1418 and 1420. Each clip member 1412, 1414 and 1416 includes an associated male connector 1430 and female connector 1432, which are generally similar in size and shape to the male connector 510 and female connector 512 described above. A three-ganged implementation lacks the ambidextrous capability of the above-described embodiments. However, such a three (or-more) ganged clip arrangement can be stored in a similarly festooned grouping (box or spool), and handled in a similar manner to those described above.

In another embodiment, a single clip member 1510 is shown in Fig. 15 as part of a festooned grouping of single clips. This grouping includes male connectors 1520 engaging adjacent female connectors 1522. These connectors define geometry similar to, or the same as that attached to the above-described clip members 412. Single ganged and multi-ganged from multi-ganged clips can all be provided on an appropriately sized spool to be dispensed as needed to a worker or automated clip-placement device.

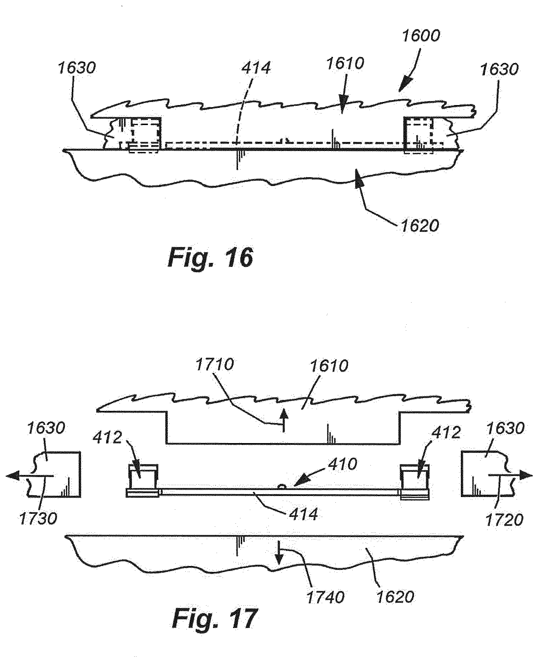

By employing appropriate manufacturing techniques, clips can be formed using extrusion, injection molding or other commercially available forming procedures. In a case of an extrusion, clips should be formed so that their features are relatively similar in an elongated direction. As the reader may surmise, such extrusion manufacturing procedures are readily employed for forming a single clip, such as that shown in Fig. 15. However, where the clip involves multiple-ganged clip members separated by narrow segments, extrusion may not provide the most effective forming technique. For such multi-ganged clips, an exemplary injection molding technique is, thus, detailed if Figs. 16 and 17. As shown in Fig. 16, the liquefied material that, when solidified, forms the finished clip is injected into a mold cavity, which defines the clip outline (in phantom lines). This exemplary mold 1600 is defined by four engagable and disengageable pieces. A shown, the mold 1600 consists of a top section 1610 that generally defines the middle segment 414, a bottom section 1620, which forms the base of the clip, and two side sections 1630 that define the cavities for the corresponding clip member base and legs.

Once the liquid clip material has solidified within the mold 1600, the mold sections 1610, 1620 and 1630 are withdrawn as shown in Fig. 16 according to a defined order. In particular, the bottom section 1610 can be withdrawn first (arrow 1730). This is followed by withdrawal of the side sections 1630 (arrow 1720), and finally by withdrawal of the top section 1620 (arrow 1710). A completed clip 410 is, thus, reviled and ready for assembly into a festooned grouping. A variety of alternate mold geometries can be employed in alternate embodiments.

Note that it is contemplated that available part-forming techniques can be employed to mold (or otherwise form) a plurality of clips together in a festooned grouping that with the constituent clips already removably connected together. In other words an entire festooned grouping is molded together. In such a procedure, a thin liquid-impermeable boundary is established between male and female connectors as they are molded. When the side pieces of such a mold are removed, the previously separated male and female connectors are brought into contact with each other. At this time they are separate components and capable of rotating with respect to each other.

As described above, it is desirable to construct a clip in accordance with this invention using materials that exhibit durability, heat-resistance, and the ability to chemically bond with ordinary foams as used in commercially available seat cushions. Durability and heat resistance are particularly desirable as it is common for the temperature of foam to rise substantially during the molding process, which may melt and/or thermally deform clips constructed from certain materials. Clips may also be prone to breakage and deformation due to the application of roll crushers (which may be heated) to the foam cushion to aid in its formation. These rollers may undesirable crush clips that are constructed from weaker/less-durable materials.

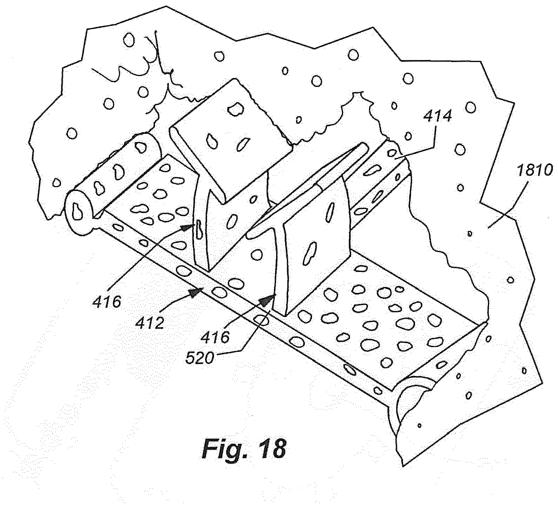

With reference to Fig. 18, surface bonding of the clip member 412 relative to the overlying foam 1810 is illustrated. In a typical implementation, the foam has been removed from the region surrounding the clip to show a surface that has been etched due to the action of chemical bonding with the foam while it is in liquid form, as shown by the depicted roughened surface on the clip member 412 and adjoining segment 414. The surface of a clip member can be relatively smooth, or can be provided with a variety of different types of surface textures and/or structures that increase bondable surface area.

It is contemplated that foams can typically comprise polyurethane compositions that are based upon methylene-diphenyl-diisocyanate (MDI) and toluene-diisocyanate (TDI), respectively representing the commercial application of so-called cold cure and hot cure foam technologies. Each of these types of foams have been shown to react chemically with certain types of hard polymers (plastics) during curing from a liquid to a solid state. A variety of materials possess these characteristics, and can be used to form clips. Some examples include, but are not limited to, nylon, polybutylene terephthalate (PBT), and polycarbonate (PC) compounds. In particular, polycarbonate can be transparent, allowing defects to be detected, has excellent molding characteristics, allowing small features to be defined in parts and has superior heat-resistance, which better survives the exothermic effects of certain foams (in which temperatures can exceed 130 C), without melting or deforming under the pressure of a roll crusher. Polycarbonate is also quite durable and long-lived under cyclic loading.

In summary, the above-described single or ganged clips, which can be provided as a festooned grouping, afford a human or automated handler with a superior system for efficiently manipulating and placing clips in a mold or other mounting assembly. By selecting appropriate materials, these clips (and other clip types) are effectively and permanently adhered to foam by chemical adhesion. These materials can effectively resist heat and pressure during the molding process, and exhibit high long-term durability during use.

Fig. 8, described above, illustrates an embodiment employing a spool having an open center core that supports a continuous festooned grouping of clips in a double-ganged arrangement. As further described with reference to Fig. 9, the stacked clips on the spool of Fig. 8 are arranged with joints that enable the respective clips deflect about a respective rotational axis relative to an adjacent clip within a predetermined angular range. illustratively, the maximum angular range of deflection is sufficient to enable an overall deflection of connected clips that conforms to a diameter of the spool core.

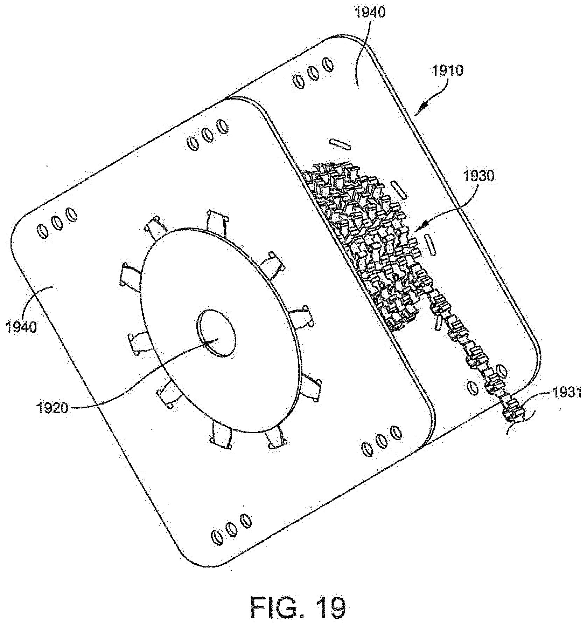

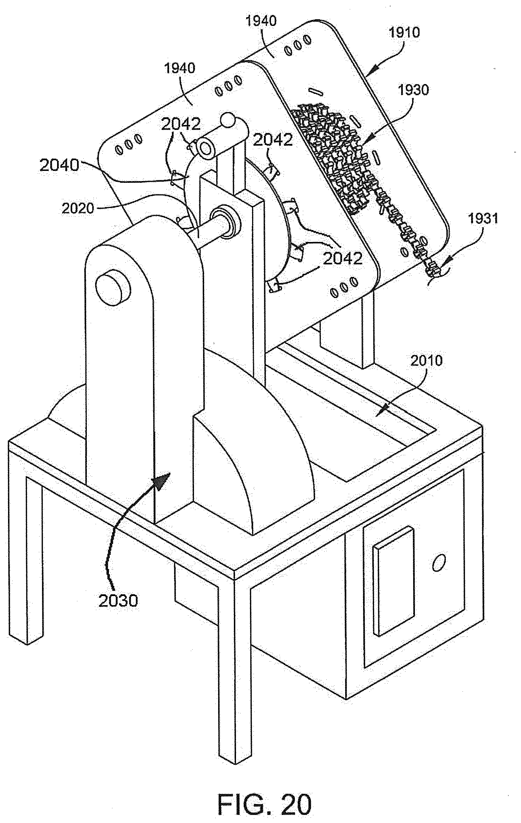

According to a further embodiment, Fig. 19 depicts a spool 1910 of somewhat conventional design (for example, for use in various manufacturing operations involving narrow webbings and weavings), which includes an open center core 1920 that supports a continuous-length arrangement (or "chain") 1930 of removably interconnected clips. In the embodiment illustrated in Figs. 19 and 20 herein, the individual clips are not multi-ganged, and are removably interconnected into an elongated arrangement of "single-gang(ed)" clips. With reference also to Fig. 20 the feed end 1931 of the elongated arrangement of continuous clips is shown. The spool 1910 includes two side flanges 1940 that restrict axial movement of clips outside of a predetermined number of side-by-side wraps. In this manner, each layer of grouped clips in the overall spooled chain is typically supported by the leg assemblies of the underlying clip layer in a manner that avoids (is free of) entanglement. This is in a manner similar to the layering described in Fig. 9.

As also shown in Fig. 20, the spool 1910 is mounted at a workstation 2010, which selectively drives the spool to pay out a desired length of the chain of clips at the feed end 1931. The workstation 2010 depicted in Fig. 20 is a conventional spool drive system that employs a motorized drive assembly 2030 to rotate a drive shaft 2020. The shaft carries a drive member 2040 that engages the side flange 1940 via a set of lugs 2042 that pass into corresponding slots in the flange. This conventional spool-drive arrangement is one of a variety of possible drive mechanisms that can be employed to advance/pay-out clips on a spool. For example, in alternate embodiments the spool core can be engaged by opposing hubs.

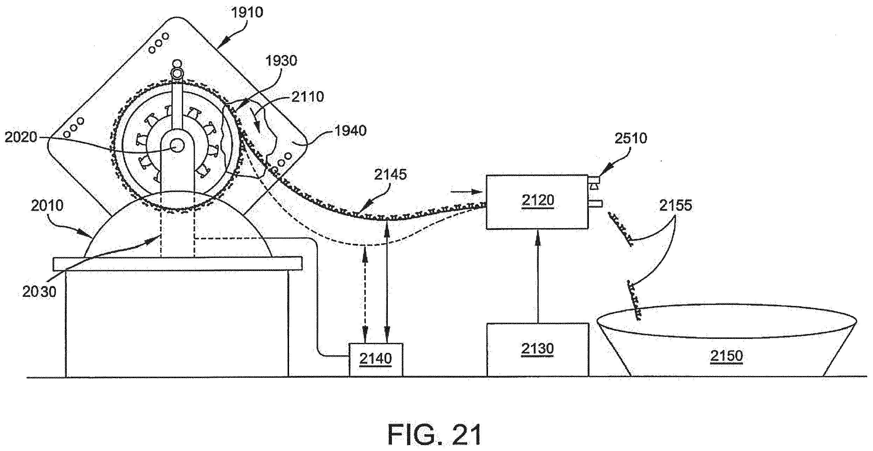

Reference is now made to Fig. 21, which illustrates a feed control system for that drives the spool 1910 to provide the interconnected clip arrangement 1930 to a clip dispenser/feeder mechanism 2120. The spool 1910 is driven by the exemplary workstation 2010 in the depicted feed direction (arrow 2110). The feeder mechanism 2121 is located at the downstream end of the overall assembly and provides a predetermined number of clips in (festooned) segments (one clip, or a plurality of interconnected clips) 2155 to downstream location, such as the depicted bin 2150. The feeder mechanism includes an appropriate feed drive (not shown) that should be clear to those of skill in the art. For example, a drive sprocket and/or an elastomeric belt can be used to drive the clips. The feeder mechanism 2120 is controlled by an electronic controller 2130 of appropriate parameters. The feeder mechanism 2120 draws clips from a free-hanging loop 2145 that extends between an upstream end of the feeder mechanism 2120 and the spool 1910. A loop sensor 2140 detects the current height of the loop 2145 as illustrated at 2145. In operation, the loop 2145 varies in height as the feeder mechanism 2120 draws lengths of the clip chain for dispensing. As shown, a loop height sensor 2140, which can be optical, ultrasonic, a mechanical dancer, and/or any other implementation in accordance with skill in the art, monitors the loop's current height. As the loop becomes taut (for example the solid-line illustration of the loop 2145), due to the draw of the feeder mechanism, the loop sensor 2140 detects an increased loop height and signals the spool drive 2030 to feed a length of the interconnected clip chain from the spool 1910. This causes the loop to sag downwardly as shown by the dashed line. When the height of the loop is sufficiently lowered, the loop height sensor 2140 signals the spool drive to cease operation. The process repeats as the feeder draws more of the chain..

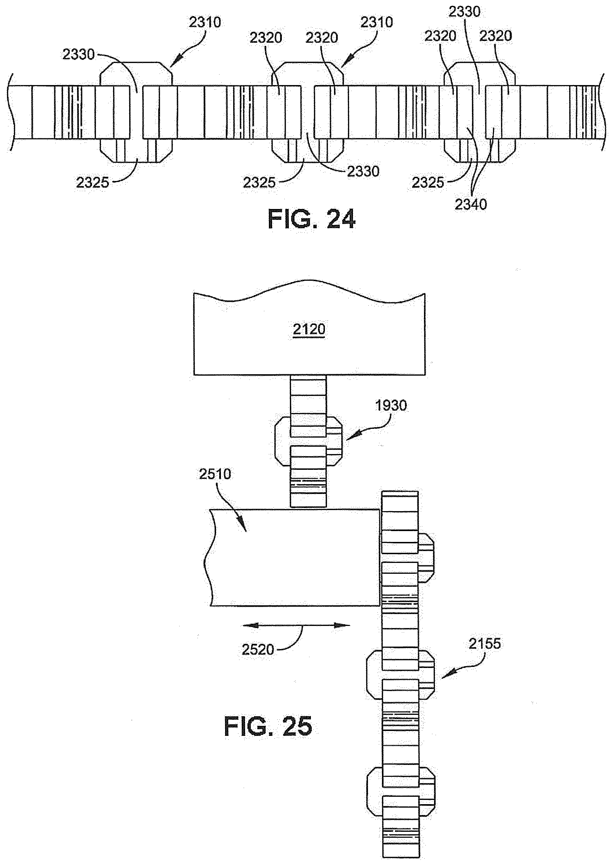

As shown in Fig. 21, the system dispenses predetermined length (where length is defined generally by the number of interconnected clips) segments 2155 of clips. To regulate the segment length, and with further reference to Fig. 25, a detachment mechanism 2510 is provided. The detachment mechanism 2510 defines a "finger" that is sized to overlap only one clip at the end of a selected segment of clips. The finger translates in the direction of arrow 2520, laterally/perpendicularly to the feed direction as shown. This translation causes the engaged clip (the rearmost clip of the selected segment to slide relative to the adjacent, directly upstream stream clip 1930. The slidable removal of clips with respect to each other avoids the risk of breakage.

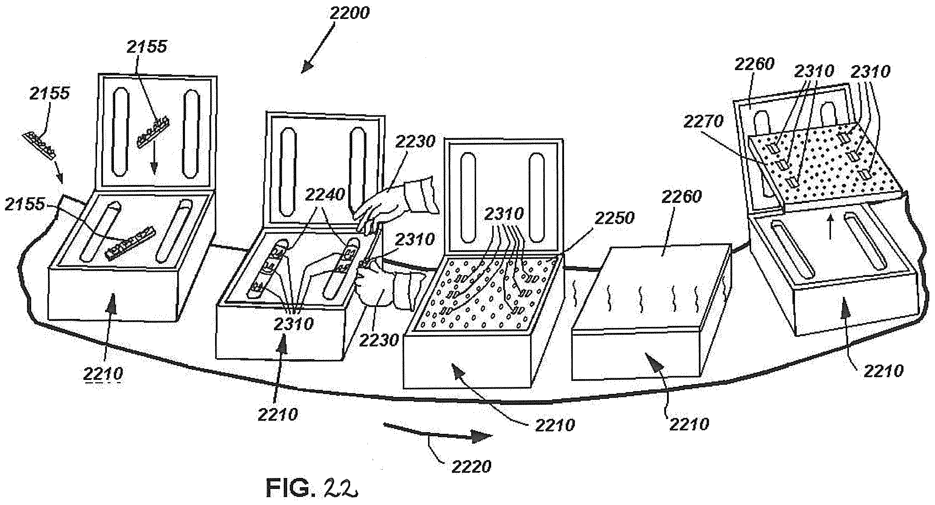

While clips that are dispensed in segments can be provided to a box, bin (2150 as shown) or other fixed/portable container, it is expressly contemplated that clips can be dispensed directly to a manufacturing location 2200 as shown generally in Fig. 22, which schematically represents a cushion molding "carousel". As shown clips dispensed from the work station (2010) are dropped into an empty mold cavity 2210. This cavity is one of a plurality of cavities 2210 that move (arrow 2220) through different stages of the overall molding process as shown. The precise number of stages and/or manufacturing stations is highly variable and the depicted process should be taken by way of example.

The feeder mechanism separates and drops clip segments 2155 of predetermined length into the empty cavity 2210 as shown. In a next stage a worker manually (hands 2230) separates the segments and places each separated clip 2310 at an appropriate location (e.g. well 2240) in the mold cavity. This process can also be performed robotically, or with a combination of human and robotic manipulation, all of which should be clear to those of skill in the art. In a manual process as shown, the use of segments allows the worker to avoid fumbling for individual clips, and rather allows him or her to hold a clip segment while efficiently stripping one clip at a time from the segment and place it in the cavity where needed.

Once the clips 2310 are all placed, the cavity is filled with liquid foam 2250 to a predetermined level. The tops of the clips 2310 remain exposed, for subsequent receipt of a listing bead, and their bases are embedded in the liquid. Then the cover 2260 of the mold is closed, applying appropriate heat and pressure. Finally, the cover 2260 is opened and a cured cushion 2270 with embedded clips is removed from the mold cavity 2210. As each mold cavity is emptied, it eventually cycles back around to receive a new set of clip segments (one or more segments) from the feeder 2120.

Note that the process depicted in Fig. 22 can also be carried out using multi-ganged clips as described above. The general sequence of process steps is similar, with the worker removing a ganged clip assembly from a multi-ganged and festooned segment.

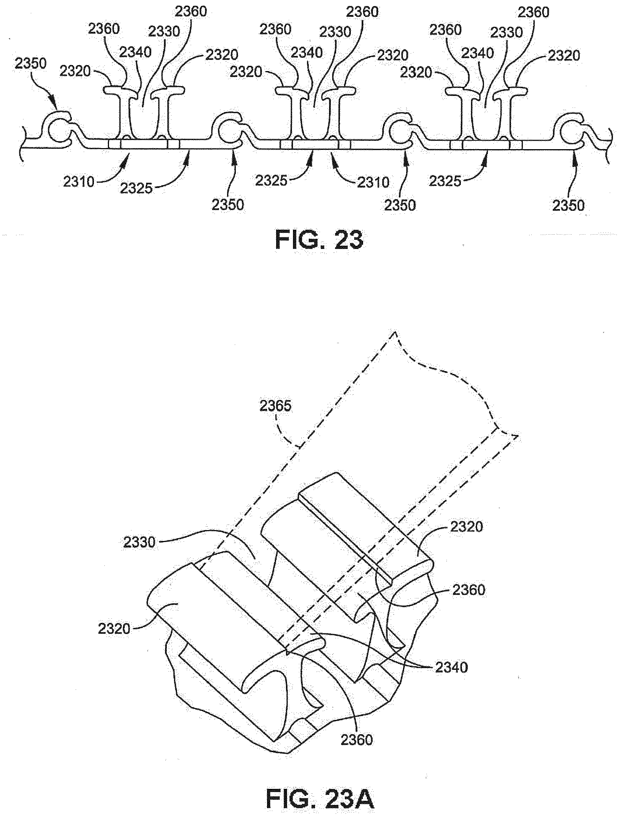

Reference is now made to Figs. 23 and 24 that show respective side elevation and top/plan views of a segment of festooned, single-gang clips such as the above-described clip segment 2155. The clip segment can be constructed from a variety of materials. In general, and as described generally above, the material should be durable, capable of withstanding reasonable levels of heat and pressure during foam curing (as shown generally in Fig. 22), and flexible so as to provide a appropriate elastic (spring) deformation. In the embodiment illustrated in Figs. 23 and 24, the clip segment is comprised of a plurality of clip members 2310 each including a pair of upright legs 2320 extending from a generally planar, central base 2325 and defining between the legs a gap 2330. This gap 2330 allows insertion of the bead of a listing member or other structure that is to be secured thereinto. In general, the legs 2320 are adapted to move elastically away from each other as a bead is passed through, and into, (snapped in) the gap 2330.

As described in previous embodiments herein, each of the legs 2320 also includes a respective inwardly slanted hook or barb 2340. These facing barbs 2340 together help to guide and/or funnel the listing bead into the gap 2330 during assembly of upholstery to the foam cushion. In addition, the barbs 2340 each define an inner shoulder that restricts outward movement of the listing, or other structural member, once it is biased through the gap.

Notably, extending from opposite ends of the base 2325 is provided a pair of attachment members or connectors 2350. In this embodiment, one attachment member is an elongated cylindrical male connector and the opposing attachment member is an open, semi-cylindrical female connector. Similar connector arrangements are described above. It is along the interface between the male and female connectors that the detachment mechanism operates for separating a predetermined number of clip members to form the clip segment as illustrated in Fig. 25.

According to the invention as also shown in Figs. 23 and 24, the illustrative clips 2310 include an additional feature on the top of each barb 2360, consisting of a transverse groove 2360. This groove 2360 is shoulder that is sized and arranged for engagement by a screwdriver 2365 or other tip/blade. The tip of the screwdriver or other implement typically engages the groove 2360 for the purpose of outwardly flexing the associated leg 2320.

Referring also to Fig. 23A, which is a fragmentary perspective view of the legs and barbs of an illustrative clip, the groove 2360 is shown engaged by the tip 2330 of an exemplary screwdriver (shown in phantom). The groove 2360 is defined as a step on the top of each barb. The tip 2330 engages groove as shown, when biased, allows the leg to deflect outwardly, and away from the adjacent leg 2320. Each of the adjacent legs 2320 is illustrated as having this stepped groove 2360 extending across the top surface of the barb. Thus either, or both legs, can be deflected outwardly in this manner, thereby allowing a listing bead to be removed from the clip through the widened gap when desired

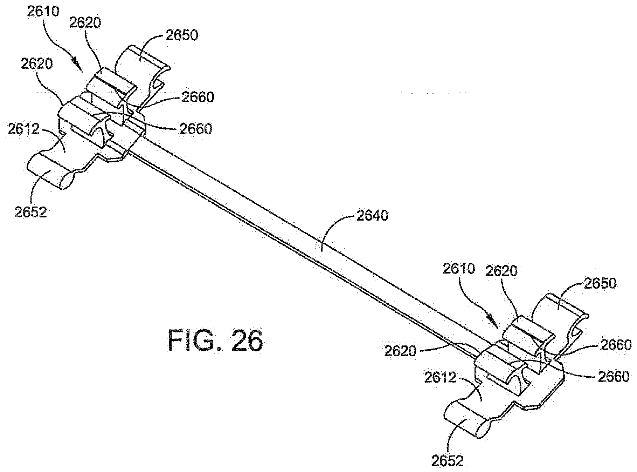

According to a further embodiment, Fig. 26 is a perspective view illustrating a pair of clip members 2610 that are interconnected (ganged together) using an shaft segment 2640 that is unitarily molded with the clip at each opposing end thereof. Each of the clip members 2610 is formed similarly or identically to the single-ganged clips 2310 described above. These clips, thus, each include includes a base 2612 and opposed respective female and male connectors 2650 and 2652. Note that the connectors on each clip are oriented mal on one side and female on the other. In alternate embodiments, such as shown and described above, the male and female connectors can alternate sides on each end of the ganged clip assembly. From the base 2612 extends a pair of spaced apart legs 2620. The clip members at either end of the connecting segment 2640 are otherwise substantially identical in construction. The top barb of each of the legs 2620, includes a transverse elongated groove 2660 as described above. Again, this groove is provided for the purpose of receiving a screwdriver or the like implement useful in separating the associated leg. In this and other embodiments, the groove can extend over the entire width of the barb or a portion thereof. It can define a linear shape, as shown or define another shape-such as dished or angular, potentially allowing a tool to remain more centered on the barb. The two/multi-ganged arrangement shown in Fig. 26 can be used as depicted (with segment intact) within a foam cushion mold cavity, or can be the first step in a manufacturing process for single-ganged clips-that is, the arrangement is molded unitarily as shown and then individual clips are separated from the segment, and formed together into long chains for placement on the above-described spool/roll.

The foregoing has been a detailed description of illustrative embodiments of the invention. Various modifications and additions can be made without departing from the scope of this invention, as long as they fall within the scope defined by the claims. Furthermore, while the foregoing describes a number of separate embodiments of the apparatus and method of the present invention, what has been described herein is merely illustrative of the application of the principles of the present invention. For example, while clips can be constructed from a material that readily bonds to liquid foam, in alternate embodiments, all or part of the clip material can be relatively inert to foam and bonded by alternate mechanisms, such as adhesives or mechanical anchoring. In addition, it is expressly contemplated that any of the storage techniques, festooning arrangements and connector structures described above can be applied to clips of any number of ganged clip members (e.g. single, dual-ganged, triple ganged, etc.). Also, while clip members are joined by unitary segments of predetermined length according to illustrative embodiments, it is expressly contemplated that the segment connectors between clip members in a multi-ganged clip arrangement can be completely or partially removable from the clip members in the arrangement. As such, the segments can be variably sized to allow adjustment of the spacing between ganged clip members. Likewise, the clip members can be provided as a multi-piece unit with the clip legs (being potentially more durable) formed from a separate material with respect to the base (being illustratively more reactive to foam). Alternatively, a unitary clip with a multiplicity of co-molded or co-extruded materials can be formed. Furthermore, while male and female connectors in the depicted embodiments are generally cylindrical so as to facilitate angular rotation between adjoining clips, in alternate embodiments (where angular rotation is not desired) the connectors can each define a conforming, nesting, non-circular cross section (such as an oval, polygon, etc.). In such an embodiment, clips can be urged to maintain a predetermined angular orientation with respect to each other. This can be desirable for storage implementations, such as the box of Fig. 7. Moreover, while a particular male and female connector are provided to each clip member in the illustrative embodiments, the general term "connector" should be taken broadly to include genderless connectors that freely interconnect with each other regardless of orientation. Accordingly, this description is meant to be taken only by way of example, and not to otherwise limit the scope of this invention.

## Claims

1. A clip assembly that is adapted to be secured into an upholstery substrate comprising:
a plurality of clip members (412) including at least a first clip member (412) and a second clip member (412), each of the first clip member (412) and the second clip member (412) respectively including a clip member base (520) and clip legs (416) extending in a spaced manner from the clip base (520) and each having a barb (420) that define an inner shoulder (620), the inner shoulders (620) of respective barbs (420) constructed and arranged to secure a bead of listing therebetween, the clip base (520) having a first base end and an opposing second base end disposed along a longitudinal axis of the first clip member (412);
the second clip member (412) including a second clip member base with second clip legs (416) extending in a spaced manner from the base (520) and each having barbs (420) that define an inner shoulder (620), the inner shoulders (620) of respective barbs (420) constructed and arranged to secure the bead therebetween, the bead extending from the second clip member base (520), and the second clip member base (520) having opposing second base ends disposed along a longitudinal axis of the second clip member (412);
a first connector (510, 512) mounted at the first base end (520) of each clip member (412) and a second connector (510, 512) mounted at the second base end (520) of each clip member (412), wherein the first connector (510, 512) of the first clip member (412) is constructed and arranged to removably attach to the second connector (510, 512) of the second clip member (412), the first clip member (412) pivoting with respect to the second clip member (412) along a connector axis transverse to the longitudinal axis; **characterized in that** the barb (420) of at least one clip leg (416) has a top surface with an elongated groove (2360, 2660) therein that extends in a direction transverse to the longitudinal axis.

2. The clip assembly of claim 1, **characterized in that** the first connector (510, 512) comprises a male connector (510), and the second connector (510, 512) comprises a female connector (512).

3. The clip assembly of claim 2, **characterized in that** the female connector (512) and male connector (510) are both semi-cylindrical connectors (510, 512).

4. The clip assembly of claim 2 or 3, **characterized in that** the female connector (512) defines an open gap (530).

5. The clip assembly of any of claims 2 to 4, **characterized in that** the diameter of the male connector (510) is slightly larger than the inner diameter of the female connector (512) to maintain a friction fit therebetween.

6. The clip assembly according to any of the preceding claims, **characterized in that** the first connector (510, 512) comprises a male connector (510) for the first clip member base (520), and the male connector (510) is arranged on a pair of outwardly extending side braces (1032) that define an opening between a central portion of the first clip member base (520) and the male connector (510).

7. The clip assembly according to any of the preceding claims, **characterized in that** each of the spaced apart legs (416) of a clip member (412) has an elongated groove (2360, 2660) therein that extends in a direction transverse to the longitudinal axis.

8. The clip assembly according to any of the preceding claims, further comprising a spool (1910), rotatable on a spool axis and upon which the plurality of clip members (412) are wound, wherein the pivoting enables angular deflection between adjacent clip members (412) so as to wrap continuously around the spool (1910).

9. The clip assembly as set forth in claim 8 further comprising a feeder (2120) for receiving the arrangement of clip members (412) from the spool (1910) and dispensing a predetermined number of clip members (412) to a dispensing location.

10. The clip assembly of claim 9, **characterized in that** the dispensing location includes a cushion mold cavity (1310).

11. A system for dispensing an elongated arrangement of removably interconnected clip members (412), each for attachment to an upholstery substrate, comprising:
a grouping of a plurality of clip members (412), including at least a first clip member (412) and a second clip member (412), each of the first clip member (412) and the second clip member (412) respectively including a clip base (520) and clip legs (416) extending in a spaced manner from the clip base (520) and each having barbs (420) constructed and arranged to secure a bead of listing thereinto, the clip base (520) having a first base end and an opposing second base end oriented along a direction of dispensing of the clip members (412) and further including a first connector (510, 512) mounted at the first base end and a second connector (510, 512) mounted at the second base end wherein the first connector (510, 512) of the first clip member (412) is constructed and arranged to removably attach to the second connector (510, 512) of the second clip member (412);
the first clip member (412) pivotally engaging with respect to the second clip member (412) along a connector axis transverse to the direction of dispensing; and
a spool (1910), rotatable on a spool axis and upon which the plurality of clip members (412) are wound, wherein the pivoting enables angular deflection between adjacent clip members (412) so as to wrap continuously around the spool (1910),
**characterized by** at least one barb having a top surface with an elongated groove (2360, 2660) therein that extends in a direction transverse to the longitudinal axis.

12. The system of claim 11 further comprising a feeder (2120) for receiving the arrangement of clip members (412) from the spool (1910) and dispensing a predetermined number of clip members (412) to a dispensing location, in particular wherein the dispensing location includes a cushion mold cavity (1310).

13. The system of claim 11 or 12, **characterized in** including an electronic controller (2130) for controlling the feeder (2120), the controller (2130) including a loop sensor (2140) that maintains a predetermined size range of loop between the spool (1910) and the feeder (2120).

14. The system of any of claims 11 to 13, **characterized in that** the feeder (2120) includes a detachment mechanism (2510) that selectively detaching a predetermined segment of the clip members (412) from the clip member arrangement in particular wherein the detachment mechanism (2510) includes a slide mechanism for contacting a predetermined clip member (412) of the segment, and detaching the clip member (412) from the arrangement.

15. A method for controlling a molding operation used in attaching clip members (412) in an upholstery substrate, comprising the steps of:
providing, on a roll, a plurality of removably interconnected clip members (412), each respectively including a clip base (520) and clip legs (416) extending in a spaced manner from the clip base (520) and each having barbs (420) constructed and arranged to secure a bead of listing thereinto, at least one barb having a top surface with an elongated groove (2360, 2660) therein that extends in a direction transverse to the longitudinal axis, the clip base (520) having opposing first and second base ends oriented along a direction of dispensing of the clip members (412), and for mounting a first connector (510, 512) and a second connector (510, 512) at respective first and second base ends of the clip member (412);
feeding a segment of interconnected clip members (412) from the roll to a location at or adjacent to a mold cavity based upon a feeder (2120) and roll drive mechanism that selects a predetermined number of clip members (412) in the segment;
separating the segment into discrete clip members (412);
arranging the clip members (412) in the mold cavity; and
filling the mold cavity with liquid foam and applying heat to secure the foam and clips together.

## Patentansprüche

1. Klemmensystem für die Befestigung in einem Polsterungssubstrat, umfassend:
eine Vielzahl von Klemmelementen (412) einschliesslich mindestens eines ersten Klemmelements (412) und eines zweiten Klemmelements (412), wobei jeweils das erste (412) und das zweite (412) Klemmelement eine Klemmelementbasis (520) und Klemmbeine (416), die sich von der Klemmbasis (520) beabstandet erstrecken, einschliessen und jeweils einen Widerhaken (420) aufweisen, der einen inneren Absatz (620) festlegt, wobei die inneren Absätze (620) der jeweiligen Widerhaken (420) so aufgebaut und angeordnet sind, dass sie zwischen sich einen eingenähten Wulst halten, wobei die Klemmbasis (520) ein erstes Basisende und ein gegenüberliegendes zweites Basisende aufweist, die entlang einer Längsachse des ersten Klemmelements (412) angeordnet sind;
das zweite Klemmelement (412) einschliesslich einer zweiten Klemmelementsbasis mit zweiten Klemmbeinen (416), die sich beabstandet von der Basis (520) erstrecken und jedes Widerhaken (420) aufweist, die einen inneren Absatz (620) festlegen, wobei die inneren Absätze (620) der jeweiligen Widerhaken (420) so aufgebaut und angeordnet sind, dass sie zwischen sich den Wulst halten, wobei sich der Wulst ausgehend von der zweiten Klemmelementbasis (520) erstreckt, und die zweite Klemmelementbasis (520) gegenüberliegende zweite Basisenden aufweist, die entlang der Längsachse des zweiten Klemmelements (412) angeordnet sind);
einen ersten Verbinder (510, 512), der am ersten Basisende (520) jedes Klemmelements (412) befestigt ist, und einen zweiten Verbinder (510, 512), der am zweiten Basisende (520) jedes Klemmelements (412) befestigt ist, wobei der erste Verbinder (510, 512) des ersten Klemmelements (412) so aufgebaut und angeordnet ist, dass er abtrennbar am zweiten Verbinder (510, 512) des zweiten Klemmelements (412) angebracht ist, wobei das erste Klemmelement (412) bezüglich des zweiten Klemmelements (412) entlang einer Verbinderachse quer zur Längsachse verschwenkbar ist;
**dadurch gekennzeichnet, dass** der Widerhaken (420) des mindestens einen Klemmbeines (416) eine obere Fläche mit einer Längsnut (2360, 2660) aufweist, die quer zur Längsachse verläuft.

2. Klemmsystem aus Anspruch 1, **dadurch gekennzeichnet, dass** der erste Verbinder (510, 512) einen Stecker (510) und der zweite Verbinder (510, 512) eine Buchse (512) umfasst.

3. Klemmsystem aus Anspruch 2, **dadurch gekennzeichnet, dass** die Buchse (512) und der Stecker (510) beides halbzylindrische Verbinder (510, 512) sind.

4. Klemmsystem aus Anspruch 2 oder 3, **dadurch gekennzeichnet, dass** die Buchse (512) eine offene Lücke (530) begrenzt.

5. Klemmsystem aus einem der Ansprüche 2 bis 4, **dadurch gekennzeichnet, dass** der Durchmesser des Steckers (510) etwas größer ist als der innere Durchmesser der Buchse (512), um eine Friktionspassung zu erhalten.

6. Klemmsystem nach einem der vorhergehenden Ansprüche, **dadurch gekennzeichnet, dass** der erste Verbinder (510, 512) einen Stecker (510) für die erste Klemmelementbasis (520) umfasst, und der Stecker (510) auf einem Paar nach aussen weisenden Seitenklammern (1032), die eine Öffnung zwischen einem Mittelteil der ersten Klemmelementbasis (520) und dem Stecker (510) begrenzen, angeordnet ist.

7. Klemmsystem nach einem der vorhergehenden Ansprüche, **dadurch gekennzeichnet, dass** jedes der beabstandeten Beine (416) eines Klemmelements (412) eine Längsnut (2360, 2660) aufweist, die sich quer zur Längsachse erstreckt.

8. Klemmsystem nach einem der vorhergehenden Ansprüche, weiter umfassend eine Spule (1910), die auf einer Spulenachse rotiert, und auf der die Vielzahl von Klemmelementen (412) aufgewickelt ist, wobei die Verschwenkung eine winklige Umlenkung zwischen benachbarten Klemmelementen (412) ermöglicht, so dass sie sich fortlaufend um die Spule (1910) wickeln.

9. Klemmsystem wie in Anspruch 8 aufgeführt, weiter umfassend eine Zuführvorrichtung (2120) zur Aufnahme der Anordnung von Klemmelementen (412) von der Spule (1910) und Abgabe einer vorher festgelegten Anzahl von Klemmelementen (412) an einen Abgabeort.

10. Klemmsystem aus Anspruch 9, **dadurch gekennzeichnet, dass** der Abgabeort einen Polsterformhohlraum (1310) einschliesst.

11. System zur Abgabe einer Längsanordnung von Klemmelementen (412), die abtrennbar miteinander verbunden sind, jeweils zur Befestigung an einem Polsterungssubstrat, umfassend:
eine Bündelung einer Vielzahl von Klemmelementen (412), einschliesslich mindestens eines ersten Klemmelements (412) und eines zweiten Klemmelements (412), wobei jeweils das erste Klemmelement (412) und das zweite Klemmelement (412) eine Klemmbasis (520) und Klemmbeine (416) einschliessen, die sich von der Klemmbasis (520) beabstandet erstrecken, und jeweils Widerhaken (420) aufweisen, die so aufgebaut und angeordnet sind, dass sie einen eingenähten Wulst zwischen sich halten, wobei die Klemmbasis (520) ein erstes Basisende und ein gegenüberliegendes zweites Basisende aufweist, die entlang einer Abgaberichtung der Klemmelemente (412) ausgerichtet sind, und weiter einen ersten Verbinder (510, 512), der am ersten Basisende montiert ist, und einen zweiten Verbinder (510, 512), der am zweiten Basisende montiert ist, einschliesst, wobei der erste Verbinder (510, 512) des ersten Klemmelementes (412) so aufgebaut und angeordnet ist, dass er abtrennbar am zweiten Verbinder (510, 512) des zweiten Klemmelementes (412) befestigt ist;
das erste Klemmelement (412), das schwenkbar bezüglich des zweiten Klemmelements (412) entlang einer Verbinderachse quer zur Abgaberichtung eingreift; und
eine Spule (1910), die auf einer Spulenachse rotiert und auf der die Vielzahl von Klemmelementen (412) aufgewickelt ist, wobei die Schwenkung eine winklige Umlenkung zwischen benachbarten Klemmelementen (412) ermöglicht, damit sie sich fortlaufend um die Spule (1910) wickeln,
**gekennzeichnet durch** mindestens einen Widerhaken mit einer oberen Fläche, die eine Längsnut (2360, 2660) aufweist, die sich quer zur Längsachse erstreckt.

12. System aus Anspruch 11, weiter umfassend eine Zuführungsvorrichtung (2120) zur Aufnahme der Anordnung von Klemmelementen (412) von der Spule (1910) und zur Abgabe einer vorher festgelegten Anzahl von Klemmelementen (412) an einen Abgabeort, wobei insbesondere der Abgabeort einen Polsterformhohlraum (1310) einschliesst.

13. System aus Anspruch 11, **dadurch gekennzeichnet, dass** eine elektronische Steuerung (2130) zur Steuerung der Zuführungsvorrichtung (2120) eingeschlossen ist, wobei die Steuerung (2130) einen Schleifensensor (2140) einschliesst, der einen vorher festgelegten Größenbereich einer Schleife zwischen der Spule (1910) und der Zuführungsvorrichtung (2120) einhält.

14. System aus einem der Ansprüche 11 bis 13, **dadurch gekennzeichnet, dass** die Zuführungsvorrichtung (2120) einen Abtrennmechanismus (2510) einschliesst, der selektiv einen vorher bestimmten Abschnitt der Klemmelemente (412) von der Klemmelementeanordnung abtrennt, wobei insbesondere der Abtrennmechanismus (2510) einen Schiebemechanismus für den Kontakt mit einem vorher bestimmten Klemmelement (412) des Abschnitts und zur Abtrennung des Klemmelements (412) von der Anordnung einschliesst.

15. Verfahren zur Steuerung eines Formungsvorgangs, der bei der Befestigung von Klemmelementen (412) in einem Polstersubstrat angewendet wird, umfassend die Schritte:
Bereitstellung einer Vielzahl von abtrennbar miteinander verbundenen Klemmelementen (412) auf einer Rolle, wobei jedes jeweils eine Klemmbasis (520) und Klemmbeine (416) einschliesst, die sich von der Klemmbasis (520) beabstandet erstrecken, und jeweils Widerhaken (420) aufweisen, die so aufgebaut und angeordnet sind, dass sie zwischen sich einen eingenähten Wulst halten, wobei mindestens ein Widerhaken eine obere Fläche mit einer Längsnut (2360, 2660) aufweist, die quer zur Längsachse erstreckt, wobei die Klemmbasis (520) einander gegenüberliegend ein erstes und ein zweites Basisende aufweist, die entlang einer Richtung zur Abgabe der Klemmelemente (412) ausgerichtet ist, und zur Montage eines ersten Verbinders (510, 512) und eines zweiten Verbinders (510, 512) jeweils am ersten und zweiten Basisende des Klemmelementes (412);
Zuführung eines Abschnittes von miteinander verbundenen Klemmelementen (412) von der Rolle zu einem Ort an oder neben einem Formhohlraum, die auf einer Zuführungsvorrichtung (2120) und einem Rollenantriebsmechanismus, der eine vorher bestimmte Anzahl von Klemmelementen (412) im Abschnitt auswählt, basiert;
Abtrennen des Abschnitts in einzelne Klemmelemente (412);
Anordnen der Klemmelemente (412) im Formhohlraum; und
Auffüllen des Formhohlraums mit Flüssigschaum und Erwärmen, um Schaum und Klemmen zusammen zu halten.

## Revendications

1. Système d'agrafe adapté à la fixation dans un matériau de rembourrage comprenant :
plusieurs éléments d'agrafe (412) incluant au moins un premier élément d'agrafe (412) et un deuxième élément d'agrafe (412) avec chacun des deux premiers et deuxième éléments (412) incluant une base d'élément d'agrafe (520) et des branches d'agrafe (416) s'étendant de façon espacée de la base d'élément d'agrafe (520) et ayant chacun un crochet (420) formant un coté intérieur (620), lesdits cotés intérieurs (620) des crochets (420) correspondants étant réalisés et placés de façon à maintenir à son intérieur un amas et ladite base d'élément d'agrafe (520) ayant une première extrémité et une deuxième extrémité opposée selon un axe longitudinal du premier élément d'agrafe (412);
un deuxième élément d'agrafe (412) une base d'élément d'agrafe (520) et des branches d'agrafe (416) s'étendant de façon espacée de la base d'élément d'agrafe (520) et ayant chacun un crochet (420) formant un coté intérieur (620), lesdits cotés intérieurs (620) des crochets (420) correspondants étant réalisés et placés de façon à maintenir à son intérieur un amas et ladite base d'élément d'agrafe (520) ayant une première extrémité et une deuxième extrémité opposée selon un axe longitudinal du premier élément d'agrafe (412);
un premier connecteur (510, 512) fixé au niveau de la première extrémité (520) de la base de chaque élément d'agrafe (412) et un deuxième connecteur (510, 512) fixé au niveau de la deuxième extrémité (520) de la base de chaque élément d'agrafe (412) de façon à ce que le premier connecteur (510, 512) du premier élément d'agrafe (412) est réalisé et configuré afin de pouvoir se fixer de façon amovible au deuxième connecteur (510, 512) du deuxième élément d'agrafe (412) et à ce que le premier élément d'agrafe (412) peut pivoter par rapport au deuxième élément d'agrafe (412) autour de l'axe du connecteur transversal à l'axe longitudinal;
**caractérisé en ce que** le crochet (420) d'au moins une branche d'agrafe (416) possède une surface supérieure avec un décrochement allongé (2360, 2660) et orientée selon une direction transversale par rapport à l'axe longitudinal.

2. Système d'agrafe selon la revendication 1, **caractérisé en ce que** le premier connecteur (510, 512) forme un connecteur mâle (510) et **en ce que** le deuxième connecteur (510, 512) forme un connecteur femelle (512).

3. Système d'agrafe selon la revendication 2, **caractérisé en ce que** le connecteur femelle (512) et le connecteur mâle (510) sont tous les deux des connecteurs semi-cylindriques (510, 512) .

4. Système d'agrafe selon une des deux revendications 2 et 3, **caractérisé en ce que** le connecteur femelle (512) forme une fente (530).

5. Système d'agrafe selon une des revendications 2 à 4, **caractérisé en ce que** le diamètre du connecteur mâle (510) est légèrement plus grand que le diamètre intérieur du connecteur femelle (512) pour un emboîtement à friction entre les deux.

6. Système d'agrafe selon une des revendications précédentes, **caractérisé en ce que** le premier connecteur (510, 512) est formé par un connecteur mâle (510) pour la première base d'agrafe (520) et **en ce que** ce connecteur mâle (510) est situé sur une paire d'entretoises latérales (1032) s'étendant vers l'extérieur et formant une ouverture entre la partie centrale de la première base d'agrafe (520) et le connecteur mâle (510) .

7. Système d'agrafe selon une des revendications précédentes, **caractérisé en ce que** des branches espacées (416) d'un élément d'agrafe (412) possède un décrochement allongé (2360, 2660) qui s'étend selon une direction transversale par rapport à l'axe longitudinal.

8. Système d'agrafe selon une des revendications précédentes, comprenant de plus une bobine (1910), pouvant tourner autour d'un axe de bobine et sur laquelle plusieurs éléments d'agrafe (412) sont enroulés aidé par le pivotement permettant une flexion entre des éléments d'agrafes voisins (412) afin de pouvoir les enrouler de façon continue autour de la bobine (1910).

9. Système d'agrafe selon la revendication 8, comprenant de plus un chargeur (2120) destiné à recevoir l'ensemble d'éléments d'agrafe (412) de la bobine (1910) et permettant d'acheminer un nombre prédéterminé d'éléments d'agrafe (412) vers un emplacement de distribution.

10. Système d'agrafe selon la revendication 9, **caractérisé en ce que** l'emplacement de distribution inclut une cavité de moulage pour coussins (1310).

11. Un système destiné àdistribuer une chaine d'éléments d'agrafe (412) interconnectés de façon amovible, chacun destiné à une fixation dans une garniture de rembourrage, comprenant :
une chaine de plusieurs éléments d'agrafe (412), incluant au moins un premier élément d'agrafe (412) et un deuxième élément d'agrafe (412) avec chacun des deux premier et deuxième éléments (412) incluant une base d'élément d'agrafe (520) et des branches d'agrafe (416) s'étendant de façon espacée de la base d'élément d'agrafe (520) et ayant chacun un crochet (420) formant un coté intérieur (620), lesdits cotés intérieurs (620) des crochets (420) correspondants étant réalisés et placés de façon à maintenir à son intérieur un amas et ladite base d'élément d'agrafe (520) ayant une première extrémité et une deuxième extrémité opposées selon la direction de distribution des éléments d'agrafe (412) et de plus un premier connecteur (510, 512) fixé au niveau de la première extrémité (520) de la base de chaque élément d'agrafe (412) et un deuxième connecteur (510, 512) fixé au niveau de la deuxième extrémité (520) de la base de chaque élément d'agrafe (412) de façon à ce que le premier connecteur (510, 512) du premier élément d'agrafe (412) est réalisé et configuré afin de pouvoir se fixer de façon amovible au deuxième connecteur (510, 512) du deuxième élément d'agrafe (412);
le premier élément d'agrafe (412) étant pivotant par rapport au deuxième élément d'agrafe (412) autour d'un axe du connecteur transversale à la direction de distribution ;
et une bobine (1910), pouvant tourner autour d'un axe de bobine et sur laquelle plusieurs éléments d'agrafe (412) sont enroulés aidé par le pivotement permettant une flexion entre des éléments d'agrafes voisins (412) afin de pouvoir les enrouler de façon continue autour de la bobine (1910),
**caractérisé par** l'existence d'au moins un crochet possédant une surface supérieure avec un décrochement allongé (2360, 2660) et orientée selon une direction transversale par rapport à l'axe longitudinal.

12. Le système selon la revendication 11 comprenant de plus un chargeur (2120) destiné à recevoir l'ensemble d'éléments d'agrafe (412) de la bobine (1910) et permettant d'acheminer un nombre prédéterminé d'éléments d'agrafe (412) vers un emplacement de distribution et en particulier en ce que l'emplacement de distribution inclut une cavité de moulage pour coussins (1310).

13. Le système selon la revendication 11 ou 12, **caractérisé par** l'intégration d'un contrôleur électronique (2130) contrôlant le chargeur (2120) et incluant un capteur de boucle (2140) maintenant une hauteur prédéterminée de la boucle entre la bobine (1910) et le chargeur (2120).

14. Le système selon une des revendications 11 à 13, **caractérisé en ce que** le chargeur (2120) inclut un dispositif de séparation (2510) permettant de sélectivement séparer un segment d'agrafes (412) prédéfini de la chaine d'éléments d'agrafe, en particulier avec un dispositif de séparation (2510) incluant un mécanisme coulissant qui entre en contact avec un élément d'agrafe sélectionné (412) pour ensuite séparer l'élément d'agrafe (412) de la chaine d'agrafe.

15. Une méthode destinée à contrôler une opération de moulage utilisée pour la fixation d'éléments d'agrafe (412) dans une garniture de rembourrage, comprenant les étapes :
mise en place sur un rouleau d'un nombre d'éléments d'agrafe (412) interconnectés de façon amovible, chacun incluant une base d'élément d'agrafe (520) et des branches d'agrafe (416) s'étendant de façon espacée de la base d'élément d'agrafe (520) et ayant chacun un crochet (420) réalisé et placé de façon à maintenir à son intérieur un amas et dont au moins un possède une surface supérieure avec un décrochement allongé (2360, 2660) et orientée en direction transversale à l'axe longitudinal, et ayant une base d'élément d'agrafe (520) avec une première extrémité et une deuxième extrémité opposée selon la direction de distribution des éléments d'agrafe (412) et, pour l'assemblage, un premier connecteur (510, 512) et un deuxième connecteur (510, 512) fixés au niveau de la première et deuxième extrémités (520) correspondante de la base de l'élément d'agrafe (412) ;
acheminement d'un segment d'éléments d'agrafe (412) interconnectés d'un rouleau vers un emplacement sur ou au niveau d'une cavité de moulage avec un chargeur (2120) et un dispositif de commande du rouleau sélectionnant un nombre prédéfini d'éléments d'agrafe (412) du segment de chaîne d'agrafes ;
individualisation des différents éléments d'agrafes à partir du segment de chaîne d'agrafe(412);
placement des éléments d'agrafe (412) dans la cavité de moulage ;
et remplissage de la cavité de moulage avec de la mousse liquide et application de chaleur afin de garantir la cohésion entre la mousse et les agrafes.
